# EUROPÄISCHE PATENTSCHRIFT

(11) **EP 3 072 581 B1**
(45) Veröffentlichungstag und Bekanntmachung des Hinweises auf die Patenterteilung: **13.06.2018**
(21) Anmeldenummer: 16160400.4
(22) Anmeldetag: 15.03.2016
(51) Int. Cl.: B01F 7/02, A23G 1/04, A23C 23/00, C12G 3/04, A23L 2/54, A23L 2/66

(54) **VERFAHREN UND VORRICHTUNG ZUR HERSTELLUNG VON AUFGESCHÄUMTER LEBENSMITTELMASSE MIT STÜCKEN ODER AROMA**
METHOD AND DEVICE FOR THE PREPARATION OF FOAMED FOOD MASS WITH PIECES OR FLAVOR
PROCEDE ET DISPOSITIF DE FABRICATION DE MASSE ALIMENTAIRE MOUSSANTE COMPORTANT DES MORCEAUX OU DES AROMES

(30) Priorität: 27.03.2015 DE 102015205597
(43) Veröffentlichungstag der Anmeldung: 28.09.2016
(73) Patentinhaber: Dr. AUGUST OETKER NAHRUNGSMITTEL KG, 33617 Bielefeld (DE)
(72) Erfinder: FAGNOUL, Daniel, 47623 Kevelaer (DE); DUBE, Michael, 46325 Broken (DE); BRANDT, Rainer, 47139 Duisburg (DE); HÖRSTMANN-JUNGEMANN, Konrad, 49078 Osnabrück (DE)
(74) Vertreter: Taruttis, Stefan Georg

(56) Entgegenhaltungen:
- WO-A2-2008/077116
- DE-A1- 19 750 677
- DE-U1- 29 709 060
- GB-A- 1 240 865
- US-A- 5 024 066

## Beschreibung

Die Erfindung betrifft ein Verfahren und eine für das Verfahren verwendbare Vorrichtung zur kontinuierlichen Herstellung von aufgeschäumter erster Lebensmittelmasse, die ein zweites eingemischtes Lebensmittel aufweist, das nicht aufzuschlagen ist, insbesondere Stücke aus einem zweiten festen Lebensmittel aufweist, das in der ersten Lebensmittelmasse unlöslich ist. Die erste Lebensmittelmasse ist mit Gas, z.B. Luft oder Stickstoff, zu einem Schaum aufschlagbar, insbesondere eine wässrige proteinhaltige Zusammensetzung, z.B. mit einem Gehalt an Protein, das z.B. Milchprotein ist, Eiklar, Gelatinelösung, bevorzugt Sahne, Pudding, optional mit einem Gehalt an Aroma, Süßungsmittel, Gewürz und/oder Farbstoff. Optional enthält das erste Lebensmittel ein Verdickungsmittel und/oder Schaumstabilisator, z.B. aus der Gruppe, die Protein, z.B. Gelatine (z.B. aus Rind und/oder Schwein) und Milcheiweiß, und/oder Polysaccharide umfasst, z.B. Carrageen, Alginat, Guarkernmehl, native Stärke, modifizierte Stärke, Pektin, Johannisbrotkernmehl, und/oder Xanthan und Mischungen dieser umfasst oder daraus besteht. Weiter optional kann das erste Lebensmittel zumindest einen Emulgator enthalten, z.B. Milchsäureester von Mono- und Diglyceriden von Speisefettsäuren, insbesondere aus Palmfettsäuren.

Das zweite Lebensmittel kann flüssig sein, z.B. ein alkoholisches Getränk, das ein Aroma bildet, z.B. Obstbrand, Likör, Eierlikör, ein alkoholbasiertes Aroma, eine flüssige Farbstoffzusammensetzung, Saft oder Saftkonzentrat, z.B. aus Obst und Früchten, Joghurt, Milchprotein und/oder mikrobiologische Kulturen, z.B. Lactobacillen. Bevorzugt ist das stückige zweite Lebensmittel Schokolade, ein fetthaltiges und/oder kakaohaltiges Produkt, z.B. Kuvertüre, Stücke von Nüssen, Beeren, die bevorzugt getrocknet sind, gegarter Reis oder eine Kombination daraus, wobei das zweite Lebensmittel unbehandelt oder behandelt sein kann.

### Stand der Technik

Die EP 0818150 A2 beschreibt eine Temperiermaschine für Schokolade mit mehreren nacheinander durchströmten Kammern, die von radialen Wänden innerhalb eines Zylinders gebildet werden, in denen jeweils eine Scheibe rotiert, wobei zwischen den Kammern ein Abschnitt eine Aufschlagstufe mit rotierenden Schlagelementen und Gaszufuhr bildet.

Die EP 0141991 A1 zeigt einen Kocher für Bonbonmasse, an dessen Ausdampf- und Austragseinrichtung sich eine Förderschnecke anschließt, die abschnittsweise Mischelemente aufweist, um zugeführtes Gas einzumischen.

Die WO 02/37977 A1 beschreibt das satzweise Aufschlagen von Sahne und das anschließende Einrühren einer heißen wässrigen Gelatinelösung und weiterer Lebensmittel mittels einer Küchenmaschine mit Schneebesen.

Die DE 3418338 A1 beschreibt das Aufschäumen von z.B. Sahne durch Aufdrücken mit Gas und anschließender Expansion in ein Dispergierrohr.

Die DE 297 09 060 U1 beschreibt einen Bausatz für einen Mischer, der in einem Gehäuse einen umlaufend angetriebenen Rotor mit vorspringenden Stiften aufweist, die mit Statorelementen am Gehäuse kämmen. Längs des Gehäuses können Zuleitungen für zuzuführende Stoffströme angeschlossen sein.

Die US 2 197 919 A zeigt ein kontinuierliches Verfahren zur Herstellung aufgeschäumter Bonbonmasse durch kontinuierliches Pumpen der Masse und von Druckluft in ein Statorgehäuse, das radial und axial beabstandete Schlagelemente am Rotor aufweist und damit kämmende statische Schlagelemente am Stator. Die austretende aufgeschlagene Masse wird durch eine Rohrleitung kontinuierlich einem Mischer zugeführt, in den kontinuierlich Kaugummimasse gepumpt wird und der bei einer geringeren Umdrehungszahl laufen kann.

Das Einmischen eines zweiten Lebensmittels bei Umgebungsdruck in ein bereits aufgeschlagenes erstes Lebensmittel hat den Nachteil, dass dabei der Aufschlag entweicht.

### Aufgabe der Erfindung

Die Aufgabe der Erfindung liegt in der Bereitstellung eines alternativen Verfahrens und einer alternativen Vorrichtung zur Herstellung einer aufgeschäumten ersten Lebensmittelmasse mit darin verteiltem zweitem Lebensmittel, das flüssig, bevorzugt stückig sein kann. Das Verfahren soll bevorzugt ein aufgeschäumtes erstes Lebensmittel mit darin verteiltem stückigem zweitem Lebensmittel herstellen können, das stabil ist.

### Beschreibung der Erfindung

Die Erfindung löst die Aufgabe mit den Merkmalen der Ansprüche, insbesondere durch ein kontinuierliches Verfahren und eine Vorrichtung zur Verwendung zur Herstellung aufgeschäumter erster Lebensmittelmasse, die einen Gehalt eines zweiten Lebensmittels aufweist, durch kontinuierliches Einführen der ersten Lebensmittelmasse in ein erstes Statorgehäuse und Aufschlagen in dem ersten Statorgehäuse, das mit radial und axial beabstandeten statischen Schlagelementen versehen ist, mittels eines in dem ersten Statorgehäuse rotierenden ersten Rotors, der mit radial und axial beabstandeten Rotorschlagelementen versehen ist, die mit den statischen Schlagelementen kämmen. Dabei wird das erste Statorgehäuse mit einem zugeführten Gas unter Überdruck gesetzt und es wird ein durchgehender Überdruck in dem ersten Statorgehäuse bis zum Auslass eines daran angeschlossenen zweiten Statorgehäuses gehalten. Die Rotation des Rotors in dem ersten Statorgehäuse führt zur Erzeugung einer ersten aufgeschlagenen Lebensmittelmasse. Die aufgeschlagene erste Lebensmittelmasse und das zweite Lebensmittel werden kontinuierlich einem zweiten Statorgehäuse zugeführt und in diesem in die erste aufgeschlagene Lebensmittelmasse eingemischt, wobei der Druck auch in dem zweiten Statorgehäuse gehalten wird. Die aufgeschlagene erste Lebensmittelmasse und das zweite Lebensmittel, die kontinuierlich in das zweite Statorgehäuse eingeführt werden, das mit radial und axial beabstandeten statischen Mischelementen versehen ist, werden mittels eines in dem zweiten Statorgehäuse rotierenden zweiten Rotors gemischt, der mit radial und axial beabstandeten Rotormischelementen versehen ist, die mit den statischen Mischelementen kämmen. Dabei wird die aufgeschlagene erste Lebensmittelmasse kontinuierlich aus dem ersten Statorgehäuse in das zweite Statorgehäuse bewegt, ohne dass die aufgeschlagene erste Lebensmittelmasse durch den Strömungsweg einen wesentlichen Druckabfall mit anschließender Druckerhöhung erfährt.

Das Verfahren hat den Vorteil, kontinuierlich aus einer ersten Lebensmittelmasse einen Schaum mit darin verteiltem zweitem Lebensmittel zu erzeugen, der stabil ist. Dies ist insbesondere dann ein Vorteil, wenn das zweite Lebensmittel stückig oder flüssig ist und beim Einmischen unter Normaldruck der Aufschlag des ersten Lebensmittels entweichen würde und/oder das Einmischen einen instabilen Schaum erzeugen würde.

Die statischen Schlagelemente und/oder die Rotorschlagelemente können einen runden oder bevorzugt einen eckigen, z.B. quadratischen, Querschnitt aufweisen.

Die statischen Mischelemente und die Rotormischelemente können einen eckigen Querschnitt, der z.B. quadratisch ist, oder einen runden Querschnitt aufweisen. Mischelemente mit rundem Querschnitt können das zweite Lebensmittel, wenn es stückig ist, weniger schädigen als solche mit eckigem Querschnitt und können daher bevorzugt sein. Bevorzugt sind die Rotormischelemente und statischen Mischelemente in größerem axialen und radialen Abstand zueinander angeordnet, als der größte Durchmesser der Stücke des zweiten Lebensmittels beträgt.

Das erste Statorgehäuse weist bevorzugt an seinem ersten Ende einen Einlass für die erste Lebensmittelmasse auf und am gegenüberliegenden zweiten Ende einen Auslass für aufgeschlagene erste Lebensmittelmasse. Der Einlass für die erste Lebensmittelmasse kann axial am ersten Statorgehäuse angeordnet sein, z.B. angrenzend an eine Durchführung für die erste Welle. Der Einlass für unter Überdruck stehendes Gas kann mit dem Einlass für die erste Lebensmittelmasse verbunden sein, so dass das erste Statorgehäuse nur einen Einlass für erste Lebensmittelmasse in Mischung mit dem Gas aufweisen kann.

Bevorzugt sind die erste Lebensmittelmasse, das unter Überdruck stehende Gas und das zweite Lebensmittel sowie eventuelle Zusatzstoffe steril und das Verfahren wird steril durchgeführt und ergibt ein steriles Erzeugnis. In dieser Ausführungsform sind die erste Lebensmittelmasse und das zweite Lebensmittel einschließlich eventueller Zusatzstoffe z.B. ultrahocherhitzt und z.B. Wellendurchführungen sind als doppelte Gleitringdichtungen ausgeführt, deren Zwischenraum mit einem Trennmedium, z.B. Dampf, beaufschlagt ist.

Generell kann das zweite Lebensmittel, insbesondere wenn es stückig ist, in einem flüssigen Trägermedium suspendiert sein, das z.B. eine wässrige Zuckerlösung ist, z.B. mit Fruchtgehalt, optional mit einem Gehalt an Verdickungsmittel. Das flüssige Trägermedium ist pumpbar. Das zweite Lebensmittel kann daher, wenn es in einem Trägermedium suspendiert ist oder flüssig ist, mittels einer zweiten Pumpe kontinuierlich mit Überdruck gegenüber dem Druck innerhalb der Vorrichtung, bevorzugt pulsationsarm, bevorzugter pulsationsfrei in die aufgeschlagene erste Lebensmittelmasse dosiert werden. Zur Dosierung kann eine z.B. eine Verdrängerpumpe als Dosiereinrichtung eingesetzt werden, die mittels einer zweiten Zuleitung mit der Verbindungsleitung oder dem zweiten Einlass des zweiten Statorgehäuses verbunden ist.

Alternativ kann das zweite Lebensmittel, wenn es stückig ist, ohne flüssiges Trägermedium, z.B. als schüttfähiges oder rieselfähiges stückiges Lebensmittel in die aufgeschlagene erste Lebensmittelmasse dosiert werden. In dieser Ausführungsform kann eine Förderschnecke, ein Kammer- oder ein Kolbendoseur als Dosiereinrichtung eingesetzt werden.

Erfindungsgemäß wird der Druck in dem ersten Statorgehäuse und in dem zweiten Statorgehäuse und einer zwischen dem ersten und dem zweiten Statorgehäuse angeordneten Verbindungsleitung, die optional ist, im Wesentlichen bei einem vorbestimmten Druck aufrecht erhalten, z.B. mit einer Schwankung von maximal 20%, bevorzugter von maximal 10% oder maximal 2% bis 5% um einen vorbestimmten Druck durchgehend aufrecht erhalten. Am Auslass des zweiten Statorgehäuses ist zur Aufrechterhaltung des Drucks ein Druckhalteventil angeordnet. Das Druckhalteventil kann Teil einer an das zweite Statorgehäuse angeschlossenen Dosiereinrichtung sein.

Die Aufrechterhaltung des Drucks bzw. das Vermeiden einer Druckänderung erhält den Schaum aus der ersten Lebensmittelmasse, der im ersten Statorgehäuse erzeugt wird, stabil, wohingegen ein Druckabfall entlang des Strömungswegs zum zweiten Statorgehäuse eine Beeinträchtigung des Schaums bewirkt, auch wenn anschließend im zweiten Statorgehäuse derselbe Druck herrscht, wie im ersten Statorgehäuse.

In einer ersten Ausführungsform weist die Vorrichtung zwischen dem ersten Statorgehäuse und dem zweiten Statorgehäuse eine Verbindungsleitung auf. Dabei wird der Druck innerhalb des ersten Statorgehäuses, der Verbindungsleitung und innerhalb des zweiten Statorgehäuses z.B. bevorzugt dadurch im Wesentlichen bei einem vorbestimmten Wert aufrecht erhalten, dass das unter Überdruck stehende zugeführte Gas den Innendruck der Vorrichtung im Wesentlichen konstant hält und optional dadurch, dass der lichte Querschnitt des ersten Ringspalts, der zwischen erstem Rotor und erstem Statorgehäuse gebildet wird, der lichte Querschnitt der Verbindungsleitung und der lichte Querschnitt des zweiten Ringspalts, der zwischen zweitem Rotor und zweitem Statorgehäuse gebildet wird, etwa dieselbe Größe aufweisen, z.B. bis auf eine Abweichung um maximal 200% oder 50%, bevorzugt maximal 20%, bevorzugter bis auf eine Abweichung um maximal 10% dieselbe Größe aufweisen. Z.B. kann der lichte Querschnitt der Verbindungsleitung einen Betrag von 50 bis 200 % des Betrags des lichten Querschnitts zwischen erstem Rotor und erstem Statorgehäuse und 50% bis 200% des Betrags des lichten Querschnitts zwischen zweitem Rotor und zweitem Statorgehäuse aufweisen.

Generell weist die Vorrichtung bevorzugt einen Druckaufnehmer auf, der mit der ersten Zuleitung verbunden ist, die mit dem Einlass für die erste Lebensmittelmasse verbunden ist und die Zuführung für das Gas ist eingerichtet, einen vorbestimmten Gasüberdruck innerhalb der Vorrichtung zu halten. Optional ist die Zuführung für das Gas z.B. abhängig von dem Druckaufnehmer gesteuert, einen vorbestimmten Überdruck innerhalb der Vorrichtung zu halten.

Optional kann der Auslass des ersten Statorgehäuses von dessen Querschnittsöffnung gebildet sein und/oder der Einlass des zweiten Statorgehäuses von dessen Querschnittsöffnung, um Druckänderungen, denen die aufgeschlagene erste Lebensmittelmasse beim Durchtritt durch diesen Auslass und diesen Einlass unterliegt, zu minimieren. Das Einführen bzw. Bewegen der aufgeschlagenen ersten Lebensmittelmasse aus dem ersten in das zweite Statorgehäuse erfolgt bei Aufrechterhaltung des Drucks in beiden Statorgehäusen bevorzugt mittels einer Leitung, die zwischen den Statorgehäusen keine Vergrößerung und Verkleinerung bzw. keine Verkleinerung und Vergrößerung des Querschnitts aufweist. Eine solche Leitung kann z.B. einen konstanten Querschnitt haben, der gleich dem lichten Querschnitt zwischen dem Rotor und ersten bzw. zweiten Statorgehäuse ist oder einen Querschnitt, der sich kontinuierlich, z.B. mit konstanter Änderung über die Länge, zwischen dem lichten Querschnitt zwischen Rotor und erstem bzw. und zweitem Statorgehäuse ändert, um diese ohne Stufen miteinander zu verbinden.

Optional ist das erste Statorgehäuse dadurch mit dem zweiten Statorgehäuse verbunden, dass der durch die Querschnittsöffnung gebildete Auslass des ersten Statorgehäuses direkt mit dem durch die Querschnittsöffnung gebildeten Einlass des zweiten Statorgehäuses verbunden ist, wobei das erste und das zweite Statorgehäuse denselben Querschnitt aufweisen. Dabei können das erste und das zweite Statorgehäuse aneinander angrenzende Abschnitte eines gemeinsamen Statorgehäuses sein.

Die Bewegung bzw. Strömung der ersten Lebensmittelmasse wird bevorzugt allein durch den Druck des dem ersten Statorgehäuse zugeführten Gas und der zugeführten ersten Lebensmittelmasse angetrieben, optional zusätzlich durch die Schwerkraft, so dass die Schlagelemente keine Förderwirkung in Längsrichtung des Statorgehäuses bzw. des Rotors haben. Die Schlagelemente sind z.B. Stacheln, die radial von einer Rotorwelle bzw. von der Statorgehäuseinnenwand abstehen. Entsprechend kann die erste Lebensmittelmasse allein durch ein Druckgefälle zwischen dem kontinuierlich zugeführten Gas der kontinuierlich zugeführten ersten Lebensmittelmasse und dem Druckhalteventil zu dem Druckhalteventil gefördert werden. In dieser Ausführungsform weist der erste Rotor und/oder der zweite Rotor kein Element mit Förderwirkung auf.

Optional kann der erste Rotor und/oder der zweite Rotor ein Element mit Förderwirkung aufweisen, um die Förderung der ersten Lebensmittelmasse durch das erste und zweite Statorgehäuse zu unterstützen. Ein Element mit Förderwirkung kann z.B. ein Schaufelrad sein.

Das erste Statorgehäuse kann optional an seinem ersten Ende einen Einlass für die erste Lebensmittelmasse aufweisen und an seinem dem ersten Ende gegenüberliegenden zweiten Ende eine Öffnung, die sich über dessen gesamten Querschnitt erstreckt und die einen Auslass für die aufgeschlagene erste Lebensmittelmasse bildet. Eine Öffnung, die sich über den gesamten Querschnitt eines Stators erstreckt, wird vorliegend generell als Querschnittsöffnung bezeichnet.

Das erste Statorgehäuse weist auch einen Einlass für das unter Überdruck stehende Gas auf, der bevorzugt am ersten Ende des ersten Statorgehäuses angeordnet ist. Bevorzugt ist als Einlass für unter Überdruck stehendes Gas eine Düse am ersten Statorgehäuse angeordnet, wobei die Düse bevorzugt eine Rückschlagsicherung aufweist, um im Falle eines Druckverlusts das Eintreten von erster Lebensmittelmasse in die angeschlossene Gaszuleitung zu verringern. Die Düse ist z.B. an der ersten Leitung angeordnet.

Das zweite Statorgehäuse weist an seinem ersten Ende einen Einlass für aufgeschlagene erste Lebensmittelmasse auf, der von der Querschnittsfläche des zweiten Statorgehäuses gebildet wird. An seinem dem ersten Ende gegenüberliegenden zweiten Ende weist das zweite Statorgehäuse einen Auslass für die Mischung aus aufgeschlagenem ersten Lebensmittel und dem zweiten Lebensmittel auf. Zur Aufrechterhaltung des Gasdrucks innerhalb des ersten und zweiten Statorgehäuses weist dieser Auslass ein Druckhalteventil auf, so dass die Mischung aus dem zweiten Statorgehäuse ohne Verlust des Gasdrucks im ersten und zweiten Statorgehäuse austreten gelassen werden kann. Optional kann das Druckhalteventil abhängig von dem Druckaufnehmer gesteuert sein, um einen vorbestimmten Überdruck innerhalb der Vorrichtung zu halten.

Die Verbindungsleitung oder das zweite Statorgehäuse weist einen Einlass für das stückige zweite Lebensmittel auf, optional oben an der Verbindungsleitung bzw. am Statorgehäuse, um das zweite Lebensmittel unter Schwerkrafteinwirkung in das zweite Statorgehäuse fallen zu lassen. An diesem Einlass ist z.B. ein Vorratsbehälter für das zweite Lebensmittel mittels einer Leitung und einer Dosiereinrichtung angeschlossen ist. Der Vorratsbehälter ist optional mit Druckgas beaufschlagt, bevorzugt mit dem Gas und bei dem Druck, das dem ersten Statorgehäuse zugeführt wird.

Der erste Rotor kann entlang derselben Drehachse wie der zweite Rotor angeordnet sein. Der erste Rotor kann auf derselben Welle angeordnet sein wie der zweite Rotor. Bevorzugt sind der erste und der zweite Rotor auf jeweils getrennten Wellen angeordnet, die von jeweils einem Motor angetrieben sind. Ein getrennter Antrieb für jeden Rotor hat den Vorteil, dass im Verfahren die Drehzahl des ersten Rotors zum Aufschlagen unabhängig von der Drehzahl des zweiten Rotors zum Mischen eingestellt werden kann.

Bevorzugt sind die Rotoren einseitig gelagert, der erste Rotor an seinem ersten Ende, das seiner Querschnittsöffnung am zweiten Ende gegenüberliegt, und der zweite Rotor an seinem zweiten Ende, das seiner Querschnittsöffnung am ersten Ende gegenüberliegt. Bei einseitiger Lagerung ist bevorzugt, dass die erste Welle des ersten Rotors am ersten Ende des ersten Statorgehäuses gelagert ist und der Einlass für die erste Lebensmittelmasse in Mischung mit dem unter Überdruck stehenden Gas an diesem ersten Ende angeordnet ist, bevorzugt angrenzend an oder um den Eintritt der ersten Welle in das erste Statorgehäuse, wobei weiter bevorzugt der Auslass des ersten Statorgehäuses in einem axialen Abstand zur ersten Welle angeordnet ist, optional entlang der Drehachse der ersten Welle in dem ersten Statorgehäuse gebildet ist. Optional bildet die Querschnittsöffnung am zweiten Ende des ersten Statorgehäuses dessen Auslass.

Die zweite Welle des zweiten Rotors ist bevorzugt einseitig am zweiten Ende des zweiten Statorgehäuses gelagert. Bevorzugt ist der Einlass am ersten Ende des zweiten Statorgehäuses in einem axialen Abstand zur zweiten Welle angeordnet, optional entlang der Drehachse der zweiten Welle in dem zweiten Statorgehäuse gebildet. Optional bildet die Querschnittsöffnung am ersten Ende des zweiten Statorgehäuses dessen Einlass.

Bei der Vorbereitung der Erfindung hat sich gezeigt, dass aufgeschlagene erste Lebensmittelmasse, insbesondere aufgeschlagene Sahne, beim anschließenden Unterrühren bei Normaldruck eines zweiten Lebensmittels, z.B. von Schokoladestücken oder Alkohol, zusammenbricht. Wenn das stückige Lebensmittel bereits vor dem Aufschlagen in die erste Lebensmittelmasse gegeben wird, wurde eine Zerkleinerung des stückigen Lebensmittels beobachtet, die unerwünscht ist, im Falle von alkoholischen Getränken als zweites Lebensmittel ein signifikant geringerer Aufschlag. Das erfindungsgemäße Verfahren vermeidet diese Nachteile.

Das Verfahren erlaubt zumindest für Sahne, Pudding oder Proteinschaum, z.B. Eiklarschaum, als erste Lebensmittelmasse die Herstellung eines Schaums mit darin verteiltem zweitem Lebensmittel, optional ohne einen Gehalt der ersten Lebensmittelmasse an Schaumstabilisator. Bevorzugt sind die statischen Schlagelemente und die Rotorschlagelemente in einem geringeren axialen und/oder geringeren radialen Abstand angeordnet als die statischen Mischelemente und die Rotormischelemente.

Das erste und zweite Statorgehäuse werden bevorzugt mit einem Gasdruck von Zumindest 0,5 bar, bevorzugt zumindest 1 bar Überdruck beaufschlagt, z.B. bis 8 bar. Bevorzugt ist das Gas steril und/oder gefiltert, insbesondere Stickstoff und/oder Luft.

Die erfindungsgemäße Vorrichtung ist zur Verwendung im Verfahren vorgesehen und weist ein erstes Statorgehäuse auf, das mit radial und axial beabstandeten ersten statischen Schlagelementen versehen ist, und einen in dem ersten Statorgehäuse rotierenden ersten Rotors, der mit radial und axial beabstandeten Rotorschlagelementen versehen ist, die mit den statischen Schlagelementen kämmen. Das erste Statorgehäuse weist einen Einlass für das erste Lebensmittel auf und einen Einlass für das Druckgas, die vorzugsweise am ersten Ende des ersten Statorgehäuses angeordnet sind, das dem zweiten Ende gegenüberliegt, an dem der Auslass angeordnet ist. Das erste Statorgehäuse ist druckdicht mit dem zweiten Statorgehäuse verbunden, indem der Auslass des ersten Statorgehäuses mit dem Einlass des zweiten Statorgehäuses verbunden ist und die Zuleitungen mit Gas unter Überdruck beaufschlagt und/oder mit einer Pumpe versehen sind und durch das Druckhalteventil am Auslass des zweiten Statorgehäuses. Das zweite Statorgehäuse ist mit radial und axial beabstandeten statischen Mischelementen versehen und weist einen zweiten Rotor auf, der mit radial und axial beabstandeten Rotormischelementen versehen ist, die mit den statischen Mischelementen kämmen. Der Einlass des zweiten Statorgehäuses wird durch einen Einlass am ersten Ende gebildet und ist mittels einer Leitung oder direkt mit dem Auslass des ersten Statorgehäuses verbunden. Im Bereich des ersten Endes weist das zweite Statorgehäuse den Einlass für das stückige zweite Lebensmittel auf. Gegenüber dem ersten Ende ist ein Auslass für die aufgeschlagene erste Lebensmittelmasse mit darin verteiltem zweitem Lebensmittel angeordnet.

Generell bevorzugt sind das erste und zweite Statorgehäuse im Verfahren gekühlt, z.B. auf eine Temperatur von 3 bis 10 °C. Dazu können beide Statorgehäuse in einem Kühlraum stehen oder, bevorzugt, einen Kühlmantel aufweisen. Der Kühlmantel wird z.B. mit Kühlmedium einer Temperatur von 1 bis 3 °C durchströmt.

Die Erfindung wird nun genauer anhand von Beispielen und mit Bezug auf die Figuren beschrieben, die schematisch
- in Figur 1 eine erfindungsgemäße Vorrichtung und
- in Figur 2 eine erfindungsgemäße Vorrichtung zeigt.

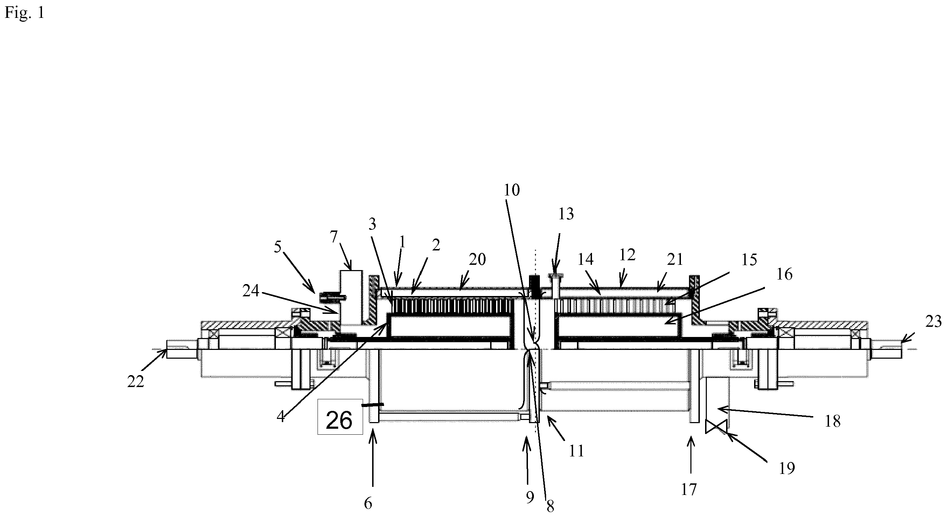

Die Figur 1 zeigt ein erstes Statorgehäuse 1, von dessen Innenwand statische Schlagelemente 2 abstehen, die radial und axial voneinander beabstandet sind, radial zur Mittelachse M des ersten Statorgehäuses 1 angeordnet sind und mit den Rotorschlagelementen 3 kämmen, die radial und axial beabstandet vom ersten Rotor 4 radial abstehen. Das erste Statorgehäuse 1 weist einen Einlass 5 für Druckgas und an seinem ersten Ende 6 einen Einlass 7 für die erste Lebensmittelmasse auf. Der Einlass für Druckgas und der Einlass 7 für die erste Lebensmittelmasse sind mittels einer gemeinsamen Zuführleitung 24 mit dem Einlass 7 verbunden. Der Auslass des ersten Statorgehäuses 1 wird von seiner Querschnittsöffnung 8 gebildet, die gegenüber dem ersten Ende 6 am zweiten Ende 9 des ersten Statorgehäuses 1 liegt. Der von der Querschnittsöffnung 8 gebildete Auslass ist direkt mit dem von der Querschnittsöffnung 10 am ersten Ende 11 des zweiten Statorgehäuses 12 gebildeten Einlass verbunden. Der Einlass am ersten Ende 11 des zweiten Statorgehäuses 12 weist denselben Querschnitt wie der Auslass am zweiten Ende 9 des ersten Statorgehäuses 1 auf, sodass Druckänderungen beim Übertritt aufgeschlagener erster Lebensmittelmasse aus dem ersten Statorgehäuse 1 in das zweite Statorgehäuse 12 vermieden werden. Das zweite Statorgehäuse 12 weist an seinem ersten Ende 11 einen Einlass 13 für das stückige zweite Lebensmittel auf, so dass die strömende erste Lebensmittelmasse, in der Figur 1 von links nach rechts, durch den Einlass 13 eintretendes zweites Lebensmittel in den Bereich der statischen Mischelemente 14, die radial und axial beabstandet von der Innenwand des zweiten Statorgehäuses 12 abstehen und der Rotormischelemente 15 mitnimmt, die radial und axial beabstandet vom zweiten Rotor 16 radial abstehen. Am zweiten Ende 17 des zweiten Statorgehäuses 12 ist ein Auslass 18 zum Austritt der Mischung aus aufgeschlagener erster Lebensmittelmasse mit darin verteiltem zweitem Lebensmittel angeordnet. Der Auslass 18 ist mit einem Druckhalteventil 19 verschließbar, das abhängig vom Innendruck im ersten und zweiten Statorgehäuse 1, 12 gesteuert ist.

Das erste Statorgehäuse 1 weist einen Doppelmantel 20 als Kühleinrichtung auf, das zweite Statorgehäuse 12 einen Doppelmantel 21 als Kühleinrichtung. Der erste Rotor 4 ist einseitig an einer ersten Welle 22 am ersten Ende 6 des ersten Statorgehäuses 1 gelagert, der zweite Rotor 16 einseitig an einer zweiten Welle 23 am zweiten Ende 17 des zweiten Statorgehäuses 12. Die Wellen 22, 23 sind jeweils mit einem separaten Antriebsmotor (nicht gezeigt) verbunden.

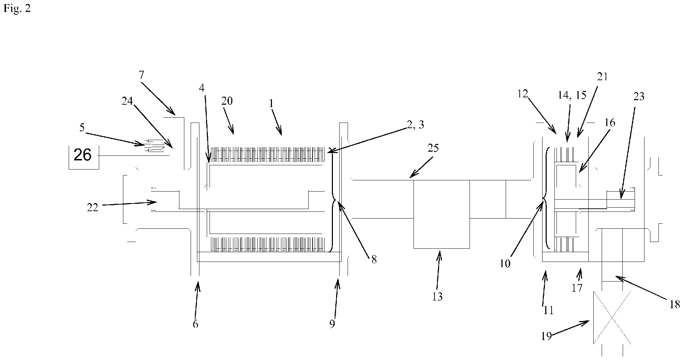

Figur 2 zeigt eine bevorzugte Ausführungsform, bei der der Auslass des ersten Statorgehäuses 1 von dessen Querschnittsöffnung 8 gebildet wird, durch eine Verbindungsleitung 25 mit dem von der Querschnittsöffnung 10 am ersten Ende 11 des zweiten Statorgehäuses 12 gebildeten Einlass verbunden ist. Die Verbindungsleitung 25 hat bevorzugt einen lichten Querschnitt, der generell 50 bis 200 %, bevorzugt 100 bis 150% des lichten Querschnitts zwischen erstem Rotor und erstem Statorgehäuse und 50 bis 200 %, bevorzugt 100 bis 150% des lichten Querschnitts zwischen zweitem Rotor und zweitem Statorgehäuse aufweist. Durch die Anordnung der Verbindungsleitung und des Auslasses des ersten Statorgehäuses 1 im Bereich der Drehachse des ersten Rotors 4, bzw. durch die Anordnung der Verbindungsleitung und des Einlasses am ersten Ende 11 des zweiten Statorgehäuses 12 bzw. im Bereich der Drehachse des zweiten Rotors wird eine gleichmäßige Durchströmung der Statorgehäuse 1, 12 erreicht und geringe Druckschwankungen für die aufgeschlagene Lebensmittelmasse entlang der beiden Gehäuse und der Verbindungsleitung.

An der Zuführleitung 24 ist ein Druckaufnehmer 26 angeordnet, um den Druck zu bestimmen. Bevorzugt ist das Druckhalteventil 19 abhängig vom Druckaufhehmer 26 gesteuert, um einen vorbestimmten Druck nicht zu unterschreiben, bzw. einen vorbestimmten Druck innerhalb der Vorrichtung konstant zu halten. Weiter bevorzugt ist eine Druckgaszuführeinrichtung (nicht dargestellt), z.B. ein Gasverdichter oder eine Gasdruckflasche, eingestellt, z.B. mittels eines Druckregelventils, abhängig vom Druckaufnehmer 26 einen vorbestimmten Druck einzustellen.

Die Figuren 1 und 2 zeigen für die jeweils einseitige Lagerung der Wellen 22, 23 doppelte Gleitringdichtungen, deren Zwischenraum mit Dampf gespült war, um den Innenraum der Vorrichtung steril zu halten. In den Figuren ist die erste Welle 22 des ersten Rotors 4 einseitig am ersten Ende 6 des ersten Statorgehäuses 1 gelagert, die zweite Welle 23 des zweiten Rotors 16 ist einseitig am zweiten Ende 17 des zweiten Statorgehäuses 12 gelagert.

### Beispiel 1: Herstellung von geschlagener Sahne mit Schokoladestücken

In diesem Beispiel wurde eine Vorrichtung nach der Figur 2 verwendet. Die Vorrichtung wurde auf ca. 6 bis 12 °C gekühlt. Als Beispiel für eine erste Lebensmittelmasse wurde Sahne von 6 bis 12 °C (20 bis 35 % Fettgehalt, 4 bis 12 Gew.-% Zucker) mit einer Strömungsrate von 200 bis 1500 l/h durch den Einlass in das erste Statorgehäuse gepumpt. Durch den Einlass des ersten Statorgehäuses wurde Stickstoff, Luft oder eine Mischung aus diesen mit einem Überdruck von 1 bis 8 bar, z.B. 3 bar zugeführt. Das Druckhalteventil wurde eingestellt, einen Überdruck von 0,5 bis 5 bar zu halten, der sich in der Vorrichtung einstellte. Als zweites Lebensmittel wurden Schokoladeflocken von ca. 2 bis 25 mm Kantenlänge durch den Einlass am ersten Ende des zweiten Statorgehäuses zugeführt.

Der erste Rotor wurde mit einer Drehzahl von ca. 10 bis 500 Upm betrieben, der zweite Rotor mit ca. 10 bis 500 Upm.

Die Mischung wurde durch das Druckhalteventil abgelassen und in Becher abgefüllt. Die Mischung wies die folgenden Eigenschaften auf: Es wurde ein stabiler Sahneschaum mit im gesamten Volumen gleichmäßig verteilten Schokoladestücken hergestellt. Eine signifikante Zerkleinerung der Schokoladestücke wurde nicht beobachtet. Bei Verwendung steriler Sahne, sterilen Druckgases und steriler Schokolade konnte ein steriles Produkt hergestellt werden. Dies wird darauf zurückgeführt, dass die einseitigen Lager der beiden Wellen doppelte Gleitringdichtungen aufwiesen, deren Zwischenraum mit Dampf als Sperrmedium beaufschlagt war.

### Beispiel 2: Herstellung von geschlagener Sahne mit Alkohol

In diesem Beispiel wurde eine Vorrichtung nach der Figur 2 verwendet. Die Vorrichtung wurde auf ca. 6 bis 12 °C gekühlt. Als Beispiel für eine erste Lebensmittelmasse wurde Sahne von 6 bis 12 °C (20 bis 35 % Fettgehalt, 4 bis 12 Gew.-% Zucker) mit einer Strömungsrate von 200 bis 1500 l/h durch den Einlass in das erste Statorgehäuse gepumpt. Durch den Einlass des ersten Statorgehäuses wurde Stickstoff, Luft oder eine Mischung aus diesen mit einem Überdruck von 1 bis 8 bar, z.B. 3 bar zugeführt. Das Druckhalteventil wurde eingestellt, einen Überdruck von 0,5 bis 5 bar zu halten, der sich in der Vorrichtung einstellte. Als zweites Lebensmittel wurde eines der folgenden alkoholischen Getränke durch den Einlass am ersten Ende des zweiten Statorgehäuses zugeführt: Eierlikör, Kirschwasser, z.B. zu ca. 0,5 bis 2 Gew.-% an der ersten Lebensmittelmasse.

Der erste Rotor wurde mit einer Drehzahl von ca. 10 bis 500 Upm betrieben, der zweite Rotor mit ca. 10 bis 500 Upm.

Die Mischung wurde durch das Druckhalteventil abgelassen und in Becher abgefüllt. Die Mischung wies die folgenden Eigenschaften auf: Es wurde ein stabiler Sahneschaum mit im gesamten Volumen gleichmäßig verteiltem Alkohol und Aroma hergestellt. Bei Verwendung steriler Sahne, sterilen Druckgases und sterilem alkoholischen Getränk konnte ein steriles Produkt hergestellt werden.

**Bezugszeichenliste:**

| | |
|---|---|
| | 14 zweite statische Schlagelemente |
| 1 erstes Statorgehäuse | 15 zweite Rotorschlagelemente |
| 2 erste statische Schlagelemente | 16 zweiter Rotor |
| 3 erste Rotorschlagelemente | 17 zweites Ende des zweiten Statorgehäuses |
| 4 erster Rotor | |
| 5 Einlass für Druckgas | 18 Auslass zum Austritt der Mischung |
| 6 erstes Ende des ersten Statorgehäuses | 19 Druckhalteventil |
| 7 Einlass für erste Lebensmittelmasse | 20 Doppelmantel |
| 8 Querschnittsöffnung | 21 Doppelmantel |
| 9 zweites Ende des ersten Statorgehäuses | 22 erste Welle |
| 10 Querschnittsöffnung am ersten Ende des zweiten Statorgehäuses | 23 zweite Welle |
| | 24 Zuführleitung |
| 11 erstes Ende des zweiten Statorgehäuses | 25 Verbindungsleitung |
| 12 zweites Statorgehäuse | 26 Druckaufnehmer |
| 13 zweiter Einlass für stückiges zweites Lebensmittel | |

## Patentansprüche

1. Kontinuierliches Verfahren zur Herstellung aufgeschäumter erster Lebensmittelmasse, die einen Gehalt eines zweiten Lebensmittels aufweist, durch kontinuierliches Einführen der ersten Lebensmittelmasse in einen an einem ersten Ende (6) eines ersten Statorgehäuses (1) angeordneten Einlass (7) und Aufschlagen der ersten Lebensmittelmasse in dem ersten Statorgehäuse (1), das mit radial und axial beabstandeten statischen Schlagelementen (2) versehen ist, mittels eines in dem ersten Statorgehäuse (1) rotierenden ersten Rotors (4), der mit radial und axial beabstandeten Rotorschlagelementen (3) versehen ist, die mit den statischen Schlagelementen (2) kämmen, mit kontinuierlichem Zuführen eines unter Überdruck stehenden Gases in das erste Statorgehäuse (1) zur Erzeugung einer ersten aufgeschlagenen Lebensmittelmasse, Austretenlassen der aufgeschlagenen ersten Lebensmittelmasse aus einem am zweiten Ende (9) des ersten Statorgehäuses (1) angeordneten Auslass (8) und Einführen der aufgeschlagenen ersten Lebensmittelmasse in einen am ersten Ende (11) eines zweiten Statorgehäuses (12) angeordneten Einlass (10), kontinierliches Einführen des zweiten Lebensmittels in das zweite Statorgehäuse (12), wobei das zweite Statorgehäuse (12) mit radial und axial beabstandeten statischen Mischelementen (14) versehen ist, und Mischen mittels eines in dem zweiten Statorgehäuse (12) rotierenden zweiten Rotors (16), der mit radial und axial beabstandeten Rotormischelementen (15) versehen ist, die mit den statischen Mischelementen (14) kämmen, Austretenlassen der Mischung aus erstem aufgeschlagenen Lebensmittel und zweiten Lebensmittel aus einem am zweiten Ende (17) des zweiten Statorgehäuses (12) angeordneten Auslass (18), **dadurch gekennzeichnet, dass** der am zweiten Ende (17) des zweiten Statorgehäuses (12) angeordnete Auslass (18) mit einem Druckhalteventil (19) versehen ist und der Druck vom Einlass (7) des ersten Statorgehäuses (1) bis zum Druckhalteventil (19) konstant gehalten wird.

2. Verfahren nach Anspruch 1, **dadurch gekennzeichnet, dass** die erste Lebensmittelmasse entlang des Strömungswegs zwischen dem Einlass (7) des ersten Statorgehäuses (1) und dem Druckhaltenventil (19) keinem Druckabfall mit anschließendem Druckanstieg unterliegt.

3. Verfahren nach Anspruch 1 oder 2, **dadurch gekennzeichnet, dass** die erste Lebensmittelmasse entlang des Strömungswegs zwischen dem Einlass (7) des ersten Statorgehäuses (1) und dem Auslass (18) des zweiten Statorgehäuses (12) dadurch keinem Druckabfall mit anschließendem Druckanstieg unterliegt, dass der Auslass des ersten Statorgehäuses von dessen Querschnittsöffnung (8) am zweiten Ende (9) gebildet ist, die mittels einer Verbindungsleitung (25) mit der Querschnittsöffnung (10) am ersten Ende (11) des zweiten Statorgehäuses (12) verbunden ist, die den Einlass des zweiten Statorgehäuses (12) bildet, wobei das zweite Lebensmittel durch einen Einlass (13) an der Verbindungsleitung (25) eingebracht wird.

4. Verfahren nach Anspruch 3, **dadurch gekennzeichnet, dass** der lichte Querschnitt der Verbindungsleitung einen Betrag von 50 bis 200 % des Betrags des lichten Querschnitts zwischen erstem Rotor (4) und erstem Statorgehäuse (1) und 50 bis 200 % des Betrags des lichten Querschnitts zwischen zweitem Rotor (16) und zweitem Statorgehäuse (12) aufweist.

5. Verfahren nach Anspruch 1 oder 2, **dadurch gekennzeichnet, dass** der Auslass des ersten Statorgehäuses von dessen Querschnittsöffnung (8) am zweiten Ende (9) gebildet ist, die unmittelbar mit der Querschnittsöffnung (10) am ersten Ende (11) des zweiten Statorgehäuses (12) verbunden ist, die den Einlass des zweiten Statorgehäuses (12) bildet.

6. Verfahren nach einem der voranstehenden Ansprüche, **dadurch gekennzeichnet, dass** die erste Lebensmittelmasse allein durch ein Druckgefälle zwischen dem kontinuierlich zugeführten Gas und dem Druckhalteventil (19) gefördert wird.

7. Verfahren nach einem der voranstehenden Ansprüche, **dadurch gekennzeichnet, dass** das erste Statorgehäuse (1), der erste Rotor (4), das zweite Statorgehäuse (12) und der zweite Rotor (16) keine Förderelemente aufweisen, die bei Drehung der Rotoren (4, 16) die erste Lebensmittelmasse entlang des ersten oder zweiten Statorgehäuses (1, 12) fördern.

8. Verfahren nach einem der voranstehenden Ansprüche, **dadurch gekennzeichnet, dass** die erste Lebensmittelmasse aus Sahne, Pudding, Eiklar, in Wasser gelöster Gelatine oder einer Mischung dieser, jeweils optional mit darin gelöstem Zucker, Farbstoff und/oder Aroma besteht.

9. Verfahren nach einem der voranstehenden Ansprüche, **dadurch gekennzeichnet, dass** das zweite Lebensmittel stückig ist.

10. Verfahren nach Anspruch 9, **dadurch gekennzeichnet, dass** das zweite Lebensmittel in einem flüssigen Trägermedium suspendiert ist.

11. Verfahren nach einem der Ansprüche 1 bis 8, **dadurch gekennzeichnet, dass** das zweite Lebensmittel flüssig ist.

12. Verfahren nach einem der voranstehenden Ansprüche, **dadurch gekennzeichnet, dass** die erste Lebensmittelmasse allein durch das Druckgefälle zwischen dem am ersten Ende des ersten Statorgehäuses (1) kontinuierlich zugeführten, unter Überdruck stehenden Gas und der kontinuierlich eingeführten ersten Lebensmittelmasse einerseits und dem Druckhalteventil (19) andererseits gefördert wird.

13. Vorrichtung zur Verwendung in einem Verfahren zur Herstellung aufgeschäumter erster Lebensmittelmasse, die einen Gehalt eines zweiten Lebensmittels aufweist, nach einem der voranstehenden Ansprüche mit einem ersten Statorgehäuse (1), an dessen Innenfläche radial und axial beabstandete statische Schlagelemente (2) festgelegt sind und in dem ein erster Rotor (4) auf einer ersten Welle drehbar angetrieben angeordnet ist, der radial und axial beabstandete Rotorschlagelemente (3) aufweist, die mit den statischen Schlagelementen (2) kämmen, wobei an dem ersten Ende (6) des ersten Statorgehäuses (1) ein Einlass (7) für ein aufzuschäumendes pumpfähiges Lebensmittel und ein Einlass (5) für Druckgas angeordnet sind und an dem gegenüberliegenden zweiten Ende (9) des ersten Statorgehäuses (1) ein entlang der Achse der ersten Welle (22) angeordneter Auslass (8) gebildet ist, mit einem zweiten Statorgehäuse (12), an dessen Innenfläche radial und axial beabstandete statische Mischelemente (14) festgelegt sind und in dem ein zweiter Rotor (16) drehbar angeordnet ist, der radial und axial beabstandete zweite Rotormischelemente (15) aufweist, die mit den statischen Mischelementen (2) kämmen, wobei ein an einem ersten Ende des zweiten Statorgehäuses (12) angeordneter Einlass (10) mit dem Auslass (8) des ersten Statorgehäuses (1) verbunden ist, wobei das zweite Statorgehäuse (12) an seinem an das erste Statorgehäuse (1) angrenzenden ersten Ende (11) einen Einlass (13) für das zweite Lebensmittel und an seinem dem ersten Ende (11) gegenüberliegenden zweiten Ende (17) einen Auslass (18) aufweist, **dadurch gekennzeichnet, dass** der am zweiten Ende (17) liegende Auslass (18) ein Druckhalteventil (19) aufweist und dass am Einlass (5) für Druckgas eine Druckgaszuführeinrichtung angeschlossen ist, die eingerichtet ist, einen vorbestimmten Druck im ersten Statorgehäuse (1) einzustellen.

14. Vorrichtung nach Anspruch 13, **dadurch gekennzeichnet, dass** der Auslass des ersten Statorgehäuses mittels einer Verbindungsleitung (25) mit dem Einlass am ersten Ende (11) des zweiten Statorgehäuses (12) verbunden ist, deren lichter Querschnitt einen Betrag von 50 bis 200 % des Betrags des lichten Querschnitts zwischen erstem Rotor (4) und erstem Statorgehäuse (1) und 50 bis 200 % des Betrags des lichten Querschnitts zwischen zweitem Rotor (16) und zweitem Statorgehäuse (12) aufweist.

15. Vorrichtung nach Anspruch 13, **dadurch gekennzeichnet, dass** die Querschnittsöffnung (8) des ersten Statorgehäuses (1) unmittelbar an die Öffnung des Querschnitts (10) des zweiten Statorgehäuses (12) angrenzt.

16. Vorrichtung nach einem der Ansprüche 13 bis 15, **dadurch gekennzeichnet, dass** die statischen Mischelemente (14) in größerem axialen und radialen Abstand zu den Rotormischelementen (15) angeordnet sind, als der axiale und radiale Abstand der statischen Schlagelemente (2) zu den Rotorschlagelementen (3).

17. Vorrichtung nach einem der Ansprüche 13 bis 16, **dadurch gekennzeichnet, dass** das erste Statorgehäuse (1) und das zweite Statorgehäuse (12) einen Doppelmantel (20, 21) als Kühleinrichtung aufweisen.

18. Vorrichtung nach einem der Ansprüche 13 bis 17, **dadurch gekennzeichnet, dass** am ersten Ende des ersten Statorgehäuses (1) nur ein Einlass gebildet ist, an den eine gemeinsame Zuführleitung (24) für erste Lebensmittelmasse und unter Überdruck stehendes Gas angeschlossen ist und an der Zuführleitung oder am ersten Statorgehäuse (1) ein Druckaufnehmer (26) angeordnet ist und an die Zuleitung eine Druckgaszuführeinrichtung angeschlossen ist, die abhängig vom Druckaufnehmer (26) gesteuert ist, um den Druck innerhalb der Vorrichtung auf einem vorbestimmten Druck einzustellen.

19. Vorrichtung nach Anspruch 18, **dadurch gekennzeichnet, dass** das Druckhalteventil (19) abhängig vom Druckaufnehmer (26) gesteuert ist, um den Druck innerhalb der Vorrichtung auf einem vorbestimmten Druck einzustellen.

20. Vorrichtung nach einem der Ansprüche 13 bis 19, **dadurch gekennzeichnet, dass** der erste und der zweite Rotor (4, 16) jeweils von einem separaten Motor angetrieben sind.

21. Vorrichtung nach einem der Ansprüche 13 bis 20, **dadurch gekennzeichnet, dass** sie zwischen dem ersten Statorgehäuse (1) und dem zweiten Statorgehäuse (12) eine Verbindungsleitung (25) aufweist.

22. Vorrichtung nach einem der Ansprüche 13 bis 20, **dadurch gekennzeichnet, dass** die erste Lebensmittelmasse entlang des Strömungswegs zwischen dem Einlass (7) des ersten Statorgehäuses (1) und dem Auslass (18) des zweiten Statorgehäuses (12) dadurch keinem Druckabfall mit anschließendem Druckanstieg unterliegt, dass der Auslass des ersten Statorgehäuses von dessen Querschnittsöffnung (8) am zweiten Ende (9) gebildet ist, die mittels einer Verbindungsleitung (25) mit der Querschnittsöffnung (10) am ersten Ende (11) des zweiten Statorgehäuses (12) verbunden ist, die den Einlass des zweiten Statorgehäuses (12) bildet, wobei für das zweite Lebensmittel ein Einlass (13) an der Verbindungsleitung (25) angeordnet ist.

## Claims

1. Continuous method for production of a foamed first foodstuff mass, which has a content of a second foodstuff, by continuous introduction of the first foodstuff mass into an inlet (7), which is arranged in a first end (6) of a first stator housing (1), and beating the first foodstuff mass in the first stator housing (1), which is provided with radially and axially spaced static beating elements (2), by means of a first rotor (4), which rotates in the first stator housing (1) and is provided with radially and axially spaced rotor beating elements (3) which mesh with the static beating elements (2), with continuous feed of a gas, which is under excess pressure, into the first stator housing (1) for producing a first beaten foodstuff mass, letting out the beaten first foodstuff mass from an outlet (8) arranged at the second end (9) of the first stator housing (1) and introducing the beaten first foodstuff mass into an inlet (10) arranged at the first end (11) of a second stator housing (12), continuously introducing the second foodstuff into the second stator housing (12), wherein the second stator housing (12) is provided with radially and axially spaced static mixing elements (14), and mixing by means of a second rotor (16), which rotates in the second stator housing (12) and is provided with radially and axially spaced rotor mixing elements (15) which mesh with the static mixing elements (14), and letting the mixture consisting of first beaten foodstuff and second foodstuff out of an outlet (18) arranged at the second end (17) of the second stator housing (12), **characterised in that** the outlet (18) arranged at the second end (17) of the second stator housing (12) is provided with a pressure maintaining valve (19) and the pressure from the inlet (7) of the first stator housing (1) up to the pressure maintaining valve (19) is kept constant.

2. Method according to claim 1, **characterised in that** the first foodstuff mass is not subject to any pressure drop with subsequent pressure rise along the flow path between the inlet (7) of the first stator housing (1) and the pressure maintaining valve (19).

3. Method according to claim 1 or 2, **characterised in that** the first foodstuff mass does not undergo any pressure drop or subsequent pressure rise along the flow path between the inlet (7) of the first stator housing (1) and the outlet (18) of the second stator housing (12) **in that** the outlet of the first stator housing is formed by the cross-sectional opening (8) thereof at the second end (9) which is connected by means of a connecting device (25) with the cross-sectional opening (10) at the first end (11) of the second stator housing (12), which forms the inlet of the second stator housing (12), wherein the second foodstuff is introduced through an inlet (13) at the connecting line (25).

4. Method according to claim 3, **characterised in that** the clear cross-section of the connecting line amounts to 50 to 200% of the amount of the clear cross-section between first rotor (4) and first stator housing (1) and 50 to 200% of the amount of the clear cross-section between second rotor (16) and second stator housing (12).

5. Method according to claim 1 or 2, **characterised in that** the outlet of the first stator housing is formed by the cross-sectional opening (8) thereof at the second end (9), which opening (8) is directly connected with the cross-sectional opening (10) at the first end (11) of the second stator housing (12), which opening (10) forms the inlet of the second stator housing (12).

6. Method according to any one of the preceding claims, **characterised in that** the first foodstuff mass is conveyed solely by a pressure difference between the continuously supplied gas and the pressure maintaining valve (19).

7. Method according to any one of the preceding claims, **characterised in that** the first stator housing (1), the first rotor (4), the second stator housing (12) and the second rotor (16) do not have any conveying elements which on rotation of the rotor (4, 16) convey the first foodstuff mass along the first or second stator housing (1, 12).

8. Method according to any one of the preceding claims, **characterised in that** the first foodstuff mass consists of cream, blancmange, eggwhite, gelatine dissolved in water or a mixture thereof, in each instance optionally with sugar, colorant and/or a flavouring dissolved therein.

9. Method according to any one of the preceding claims, **characterised in that** the second foodstuff consists of lumps.

10. Method according to claim 9, **characterised in that** the second foodstuff is suspended in a liquid carrier medium.

11. Method according to any one of claims 1 to 8, **characterised in that** the second foodstuff is liquid.

12. Method according to any one of the preceding claims, **characterised in that** the first foodstuff mass conveyed solely by the pressure difference between the gas, which is continuously fed at the first end of the first stator housing (1) and which stands under excess pressure, and the continuously introduced first foodstuff mass on the one hand and the pressure maintaining valve (19) on the other hand.

13. Device for use in a method for producing a foamed first foodstuff mass, which has a content of a second foodstuff, according to any one of the preceding claims, comprising a first stator housing (1), at the inner surface of which radially and axially spaced static beating elements (2) are fixed and in which a first rotor (4) is arranged on a first shaft to be rotatably driven, which has radially and axially spaced rotor beating elements (3) meshing with the static beating elements (2), wherein an inlet (7) for a pumpable foodstuff to be foamed and an inlet (5) for pressurised gas are arranged at the first end (6) of the first stator housing (1) and an outlet (8) arranged along the axis of the first shaft (22) is formed at the opposite, second end (9) of the first stator housing (1), and
a second stator housing (12), at the inner surface of which radially and axially spaced static mixing elements (14) are fixed and in which a second rotor (16) is rotatably arranged, which has radially and axially spaced second rotor mixing elements (15) meshing with the static mixing elements (14),
wherein an inlet (10), which is arranged at a first end of the second stator housing (12), is connected with the outlet (8) of the first stator housing (1) and wherein the second stator housing (12) has an inlet (13) for the second foodstuff at its first end (11) adjoining the first stator housing (1) and an outlet (18) at its second end (17) opposite the first end (11), **characterised in that** the outlet (18) lying at the second end (17) has a pressure maintaining valve (19) and a pressurised gas feed device, which is arranged to set a predetermined pressure in the first stator housing (1), is connected with the inlet (5) for pressurised gas.

14. Device according to claim 13, **characterised in that** the outlet of the first stator housing is connected by means of a connecting line (25) with the inlet of the first end (11) of the second stator housing (12), the clear cross-section of which line amounts to 50 to 200% of the amount of the clear cross-section between the first rotor (4) and first stator housing (1) and 50 to 200% of the amount of the clear cross-section between the second rotor (16) and second stator housing (12).

15. Device according to claim 13, **characterised in that** the cross-sectional opening (8) of the first stator housing (1) directly adjoins the opening of the cross-section (10) of the second stator housing (12).

16. Device according to any one of claims 13 to 15, **characterised in that** the static mixing elements (14) are arranged at a greater axial and radial spacing from the rotor mixing elements (15) than the axial and radial spacing of the static beating elements (2) from the rotor beating elements (3).

17. Device according to any one of claims 13 to 16, **characterised in that** the first stator housing (1) and the second stator housing (12) have a double casing (20, 21) as cooling device.

18. Device according to any one of claims 13 to 17, **characterised in that** formed at the first end of the first stator housing (1) is only one inlet, with which a common feed line (24) for the first foodstuff mass and gas, which stands under excess pressure, are connected and a pressure pick-up (26) is arranged at the feed line or at the first stator housing (1) and a pressurised gas feed device is connected with the feed line, the pressurised gas feed device being controlled independently by the pressure pick-up (26) in order to set the pressure within the device to a predetermined pressure.

19. Device according to claim 18, **characterised in that** the pressure maintaining valve (19) is controlled independently of the pressure pick-up (26) in order to set the pressure within the device to a predetermined pressure.

20. Device according to any one of claims 13 to 19, **characterised in that** the first and second rotors (4, 16) are each driven by a separate motor.

21. Device according to any one of claims 13 to 20, **characterised in that** it comprises a connecting line (25) between the first stator housing (1) and the second stator housing (12).

22. Device according to any one of claims 13 to 20, **characterised in that** the first foodstuff mass does not undergo any pressure drop with subsequent pressure rise along the flow path between the inlet (7) of the first stator housing (1) and the outlet (18) of the second stator housing (12) **in that** the outlet of the first stator housing is formed by the cross-sectional opening (8) thereof at the second end (9), which opening (8) is connected by means of a connecting line (25) with the cross-sectional opening (10) at the first end (11) of the second stator housing (12), which opening (10) forms the inlet of the second stator housing (12), wherein an inlet (13) for the second foodstuff is arranged at the connecting line (25).

## Revendications

1. Procédé continu dévolu à la production d'une première masse alimentaire mousseuse renfermant une teneur en un second aliment, par introduction continue de la première masse alimentaire dans une admission (7) située à une première extrémité (6) d'un premier carter statorique (1), et par battage de ladite première masse alimentaire dans ledit premier carter statorique (1) présentant des éléments de battage (2) statiques, espacés radialement et axialement, au moyen d'un premier rotor (4) tournant dans ledit premier carter statorique (1) et pourvu d'éléments batteurs rotoriques (3) espacés radialement et axialement, qui viennent coopérer avec lesdits éléments de battage (2) statiques, avec apport continu d'un gaz soumis à surpression, dans ledit premier carter statorique (1), en vue d'engendrer une première masse alimentaire battue ; évacuation de ladite première masse alimentaire battue, par une sortie (8) située à la seconde extrémité (9) du premier carter statorique (1), et introduction de ladite première masse alimentaire battue dans une admission (10) située à la première extrémité (11) d'un second carter statorique (12) ; introduction continue du second aliment dans ledit second carter statorique (12), lequel second carter statorique (12) est doté d'éléments mélangeurs (14) statiques, espacés radialement et axialement ; et malaxage au moyen d'un second rotor (16) tournant dans ledit second carter statorique (12) et comportant des éléments mélangeurs rotoriques (15) espacés radialement et axialement, qui viennent coopérer avec lesdits éléments mélangeurs (14) statiques ; puis décharge du mélange, composé d'un premier aliment battu et d'un second aliment, par une sortie (18) située à la seconde extrémité (17) dudit second carter statorique (12), **caractérisé par le fait que** la sortie (18) située à la seconde extrémité (17) du second carter statorique (12) est équipée d'une vanne (19) de maintien de pression, et la pression est maintenue constante depuis l'admission (7) du premier carter statorique (1) jusqu'à ladite vanne (19) de maintien de pression.

2. Procédé selon la revendication 1, **caractérisé par le fait que** la première masse alimentaire n'est soumise à aucune baisse de pression, avec accroissement consécutif de pression, le long du trajet d'écoulement entre l'admission (7) du premier carter statorique (1) et la vanne (19) de maintien de pression.

3. Procédé selon la revendication 1 ou 2, **caractérisé par le fait que** la première masse alimentaire n'est soumise à aucune baisse de pression avec accroissement consécutif de pression, le long du trajet d'écoulement entre l'admission (7) du premier carter statorique (1) et la sortie (18) du second carter statorique (12), étant donné que la sortie dudit premier carter statorique est formée par l'ouverture (8) de la section transversale de ce dernier, située au niveau de la seconde extrémité (9) et raccordée, au moyen d'un conduit de jonction (25), à l'ouverture (10) de la section transversale située au niveau de la première extrémité (11) du second carter statorique (12) et formant l'admission dudit second carter statorique (12), le second aliment étant déversé par l'intermédiaire d'une admission (13) ménagée au niveau dudit conduit de jonction (25).

4. Procédé selon la revendication 3, **caractérisé par le fait que** la section transversale intérieure du conduit de jonction offre une cote représentant de 50 à 200 % de la cote de la section transversale intérieure, entre le premier rotor (4) et le premier carter statorique (1), et de 50 à 200 % de la cote de la section transversale intérieure entre le second rotor (16) et le second carter statorique (12).

5. Procédé selon la revendication 1 ou 2, **caractérisé par le fait que** la sortie du premier carter statorique est formée par l'ouverture (8) de la section transversale de ce dernier, située au niveau de la seconde extrémité (9) et directement raccordée à l'ouverture (10) de la section transversale située au niveau de la première extrémité (11) du second carter statorique (12), et formant l'admission dudit second carter statorique (12).

6. Procédé selon l'une des revendications précédentes, **caractérisé par le fait que** la première masse alimentaire est convoyée uniquement sous l'action d'une chute de pression entre le gaz, délivré en continu, et la vanne (19) de maintien de pression.

7. Procédé selon l'une des revendications précédentes, **caractérisé par le fait que** le premier carter statorique (1), le premier rotor (4), le second carter statorique (12) et le second rotor (16) sont dépourvus d'éléments de convoyage qui, lors d'une rotation desdits rotors (4, 16), convoient la première masse alimentaire le long dudit premier ou dudit second carter statorique (1, 12).

8. Procédé selon l'une des revendications précédentes, **caractérisé par le fait que** la première masse alimentaire consiste en de la crème épaisse, en du pouding, en du blanc d'oeuf, en de la gélatine dissoute dans de l'eau, ou en un mélange de ces derniers renfermant respectivement, en option, du sucre, un colorant et/ou un arôme dissous dans ledit mélange.

9. Procédé selon l'une des revendications précédentes, **caractérisé par le fait que** le second aliment revêt la forme de morceaux.

10. Procédé selon la revendication 9, **caractérisé par le fait que** le second aliment est en suspension dans un milieu porteur liquide.

11. Procédé selon l'une des revendications 1 à 8, **caractérisé par le fait que** le second aliment est liquide.

12. Procédé selon l'une des revendications précédentes, **caractérisé par le fait que** la première masse alimentaire est convoyée uniquement sous l'action de la chute de pression entre le gaz soumis à surpression, délivré en continu au niveau de la première extrémité du premier carter statorique (1), et ladite première masse alimentaire introduite en continu, d'une part, et la vanne (19) de maintien de pression, d'autre part.

13. Dispositif réalisé pour être utilisé dans un procédé conforme à l'une des revendications précédentes, dévolu à la production d'une première masse alimentaire mousseuse renfermant une teneur en un second aliment, comprenant un premier carter statorique (1) à la face intérieure duquel sont assujettis des éléments de battage (2) statiques, espacés radialement et axialement, et dans lequel est logé un premier rotor (4) entraîné en rotation sur un premier arbre et pourvu d'éléments batteurs rotoriques (3) espacés radialement et axialement, qui viennent coopérer avec lesdits éléments de battage (2) statiques, sachant qu'une admission (7) dédiée à un aliment apte au pompage et devant être soumis à moussage, et une admission (5) dédiée à un gaz pressurisé, sont situées à la première extrémité (6) du premier carter statorique (1), et qu'une sortie (8), disposée le long de l'axe dudit premier arbre (22), est formée au niveau de la seconde extrémité opposée (9) dudit premier carter statorique (1) ; et un second carter statorique (12) à la face intérieure duquel sont assujettis des éléments mélangeurs (14) statiques, espacés radialement et axialement, et dans lequel est logé, avec faculté de rotation, un second rotor (16) muni de seconds éléments mélangeurs rotoriques (15) espacés radialement et axialement, qui viennent coopérer avec lesdits éléments mélangeurs (14) statiques, une admission (10), située à une première extrémité du second carter statorique (12), étant raccordée à la sortie (8) du premier carter statorique (1), sachant que ledit second carter statorique (12) est doté d'une admission (13) dédiée audit second aliment, au niveau de sa première extrémité (11) limitrophe dudit premier carter statorique (1), et d'une sortie (18) au niveau de sa seconde extrémité (17) opposée à ladite première extrémité (11), **caractérisé par le fait que** la sortie (18), située à la seconde extrémité (17), est équipée d'une vanne (19) de maintien de pression ; et **par le fait qu'**un système de délivrance de gaz pressurisé, raccordé à l'admission (5) dédiée à un gaz pressurisé, est agencé en vue de régler une pression prédéterminée dans le premier carter statorique (1).

14. Dispositif selon la revendication 13, **caractérisé par le fait que** la sortie du premier carter statorique est raccordée, à l'admission située au niveau de la première extrémité (11) du second carter statorique (12), au moyen d'un conduit de jonction (25) dont la section transversale intérieure offre une cote représentant de 50 à 200 % de la cote de la section transversale intérieure, entre le premier rotor (4) et ledit premier carter statorique (1), et de 50 à 200 % de la cote de la section transversale intérieure entre le second rotor (16) et ledit second carter statorique (12).

15. Dispositif selon la revendication 13, **caractérisé par le fait que** l'ouverture (8) de la section transversale du premier carter statorique (1) est directement limitrophe de l'ouverture (10) de la section transversale du second carter statorique (12).

16. Dispositif selon l'une des revendications 13 à 15, **caractérisé par le fait que** les éléments mélangeurs (14) statiques sont placés, par rapport aux éléments mélangeurs rotoriques (15), à des distances axiale et radiale supérieures aux distances axiale et radiale comprises entre les éléments de battage (2) statiques et les éléments batteurs rotoriques (3).

17. Dispositif selon l'une des revendications 13 à 16, **caractérisé par le fait que** le premier carter statorique (1) et le second carter statorique (12) sont munis d'une enveloppe double (20, 21) constituant un système de refroidissement.

18. Dispositif selon l'une des revendications 13 à 17, **caractérisé par** la présence, à la première extrémité du premier carter statorique (1), d'une unique admission à laquelle est raccordé un conduit d'amenée (24) commun, dédié à une première masse alimentaire et à un gaz soumis à surpression, un capteur de pression (26) étant implanté sur ledit conduit d'amenée ou sur ledit premier carter statorique (1), sachant qu'un système de délivrance de gaz pressurisé, raccordé audit conduit d'amenée, est commandé en fonction dudit capteur de pression (26) en vue de régler, sur une valeur prédéterminée, la pression régnant à l'intérieur dudit dispositif.

19. Dispositif selon la revendication 18, **caractérisé par le fait que** la vanne (19) de maintien de pression est commandée en fonction du capteur de pression (26) en vue de régler, sur une valeur prédéterminée, la pression régnant à l'intérieur dudit dispositif.

20. Dispositif selon l'une des revendications 13 à 19, **caractérisé par le fait que** les premier et second rotors (4, 16) sont respectivement entraînés par un moteur distinct.

21. Dispositif selon l'une des revendications 13 à 20, **caractérisé par le fait qu'**il comporte un conduit de jonction (25) entre le premier carter statorique (1) et le second carter statorique (12).

22. Dispositif selon l'une des revendications 13 à 20, **caractérisé par le fait que** la première masse alimentaire n'est soumise à aucune baisse de pression avec accroissement consécutif de pression, le long du trajet d'écoulement entre l'admission (7) du premier carter statorique (1) et la sortie (18) du second carter statorique (12), étant donné que la sortie dudit premier carter statorique est formée par l'ouverture (8) de la section transversale de ce dernier, située au niveau de la seconde extrémité (9) et raccordée, au moyen d'un conduit de jonction (25), à l'ouverture (10) de la section transversale située au niveau de la première extrémité (11) du second carter statorique (12) et formant l'admission dudit second carter statorique (12), le second aliment étant déversé par l'intermédiaire d'une admission (13) ménagée au niveau dudit conduit de jonction (25).
